# EUROPEAN PATENT SPECIFICATION

(11) **EP 3 936 389 B1**
(45) Date of publication and mention of the grant of the patent: **21.02.2024**
(21) Application number: 20783371.6
(22) Date of filing: 05.03.2020
(51) Int. Cl.: G06F 8/65, B60L 1/00, B60L 50/60, H04L 41/082

(54) **AUTOMOBILE ARITHMETIC OPERATION DEVICE**
ARITHMETISCHE OPERATIONSVORRICHTUNG FÜR KRAFTFAHRZEUGE
DISPOSITIF D'OPÉRATION ARITHMÉTIQUE D'AUTOMOBILE

(30) Priority: 29.03.2019 JP 2019068637
(43) Date of publication of application: 12.01.2022
(73) Proprietor: MAZDA MOTOR CORPORATION, Hiroshima 730-8670 (JP)
(72) Inventor: TASAKI Atsushi, Aki-gun, Hiroshima 730-8670 (JP)
(74) Representative: Thoma, Michael
(86) International application number: PCT/JP2020/009470
(87) International publication number: WO 2020/203023

(56) References cited:
- EP-A1- 2 586 662
- WO-A1-2011/161778
- WO-A1-2013/051777
- WO-A1-2015/194652
- WO-A1-2018/043107
- JP-A- 2010 167 997
- US-B1- 9 575 743

## Description

### TECHNICAL FIELD

The technique disclosed here relates to an automobile computing device.

### BACKGROUND ART

JP 2013 84143 A describes a technique related to a vehicle-mounted communication instrument that writes reprogramming data including a problem for updating a program (software) stored in an ECU and a parameter in target equipment to update software of the target equipment.

JP 2004 249914 A describes a technique for upgrading a program when a user stops an engine of a vehicle and does not use a vehicle-mounted device any more at the occurrence of function extension or function modification of a program for controlling the vehicle-mounted device.

Furthermore, US 9,575,743 B1 suggests software updates for the telematics unit, the engine control unit and the navigation unit of the vehicle, wherein, depending on the amount of stored fuel, the engine is automatically driven to charge a battery so as to have sufficient electricity for the software update.

Furthermore, EP 2 586 662 A1 suggests controlling software updates in response to battery charging time, wherein the system determines the programs that can be updated within the estimated battery charging time.

### SUMMARY OF THE INVENTION

### TECHNICAL PROBLEM

In recent years, safe driving assistance technology and autonomous driving technology using, for example, information obtained by vehicle-to-vehicle communication or information obtained through network communication with an external server or other devices have been introduced. Such safe driving assistance technology and autonomous driving technology have actively employed artificial intelligence or the like, and a program volume has increased drastically. As a result, a computing device having a relatively large scale can be employed in some cases. In such a case, if these programs are updated at the same time, there arise problems of significantly large power consumption and a considerably long required time. In particular, a vehicle-mounted computing device is supplied with electric power from a vehicle-mounted battery, which is also used for start-up of a vehicle. Thus, the amount of usable electric power is limited, and measures for this limitation are required.

The technique disclosed here has been made in view of the foregoing circumstances, and has an object of enabling update of necessary software with minimum power consumption while a driving mechanism is not in operation in an automobile computing device.

### SOLUTION TO THE PROBLEM

To solve the problems, the present invention provides for an automobile computing device as defined by claim 1, wherein preferred embodiments of the invention are laid down in the dependent claims. Thus, the suggested computing device for an automobile is configured to be mounted on an automobile, and the computing device includes: a wireless communication unit configured to receive software update information from an external network; a storage unit configured to store the software update information received from the wireless communication unit; an update controller configured to update software of the computing device, based on the software update information stored in the storage unit; and a power controller configured to control a power supply to each constituent of the computing device, wherein in a case where software update information is stored in the storage unit and a driving mechanism of the automobile is not in operation, the power controller energizes the storage unit, the update controller, and an update target indicated by the software update information, and the update controller updates software of the update target.

In the configuration of this aspect, while the driving mechanism is not in operation, if software update information is included in the storage unit, the storage unit, the update controller, and software of the update target are energized so that the update controller can thereby update the software of the update target. Accordingly, while the driving mechanism is not in operation, necessary software update can be performed with minimum power consumption.

In the computing device, in a case where the software update information is received while the driving mechanism is in operation, the storage unit may temporarily store the software update information, and after operation of the driving mechanism is stopped, the update controller updates software of the update target.

Accordingly, software update information can be received even while the driving mechanism is in operation, and software of the update target can be updated at an appropriate timing. In addition, software can be updated without influence of a communication status of a point where the vehicle is stopped.

In the computing device, the update controller may update the software of the update target in a time period in which a user does not use the automobile computing device, based on input information from the user or a usage habit of the user.

This configuration can reduce or eliminate a time in which the user cannot use the computing device, and convenience can be enhanced.

In the computing device, the computing device may be configured to acquire status information of a battery of the automobile, and in a case where a remaining capacity of at least one of the battery or a memory of the automobile is small, the update controller may either sequentially update software of the update target in descending order of importance or perform no update.

With this configuration, even in a case where the remaining capacity of the memory or the battery is small, software having high importance can be updated. In addition, the option of not performing update itself can avoid an event that update of software affects traveling of the automobile, for example.

The computing device may be configured to acquire status information of a battery of the automobile, and in a case where the battery of the automobile is being charged, the update controller may sequentially update software of the update target in descending order of power consumption.

While the battery is being charged, unlike the case of not charging the battery, a sufficient capacity of electric power is available for updating software. Thus, influence of software update on the battery can be reduced by sequentially updating software in descending order of power consumption.

The computing device is configured to acquire status information of a battery of the automobile, and in a case where the battery of the automobile is being charged, the update controller may sequentially update the software of the update target in descending order of power consumption and time required for updating the software, in accordance with a necessary charging time .

With this configuration, the charging time can be effectively used. In addition, the time in which the user cannot use the computing device can be shortened.

### ADVANTAGES OF THE INVENTION

As described above, the technique disclose here enables update of necessary software with minimum power consumption while a driving mechanism is not in operation in an automobile computing device.

### BRIEF DESCRIPTION OF THE DRAWINGS

[FIG. 1] A block diagram illustrating a functional configuration of an automobile computing device according to an embodiment.
[FIG. 2] A view illustrating an example configuration of software of the computing device according to the embodiment.
[FIG. 3] A flowchart depicting an update process of software by the computing device.
[FIG. 4A] A block diagram illustrating a functional configuration of an introduction example to a real system.
[FIG. 4B] A block diagram illustrating a functional configuration of an introduction example to a real system.

### DESCRIPTION OF EMBODIMENTS

An exemplary embodiment will be hereinafter described in detail with reference to the drawings.

### EMBODIMENT

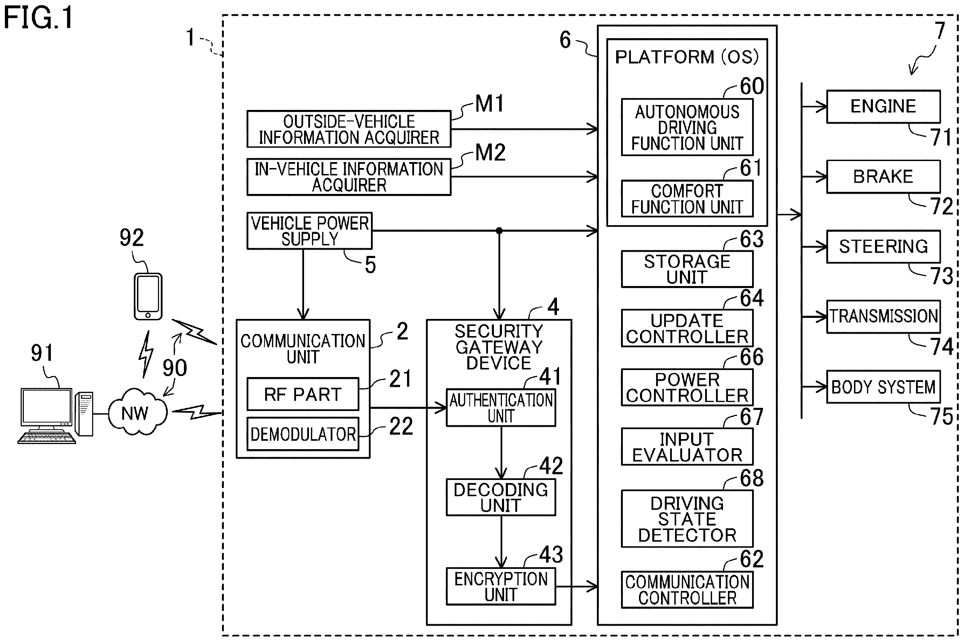

FIG. 1 is a block diagram illustrating an example configuration of an automobile 1 (e.g., a four-wheeled vehicle) according to an embodiment. The automobile 1 is capable of performing manual driving of traveling in accordance with an operation of, for example, an accelerator by a driver, assist driving of traveling with assistance to an operation of a driver, and autonomous driving of traveling without an operation by the driver. In the following description, to distinguish the automobile 1 of this embodiment from other vehicles, the automobile 1 will also be referred to as an own-vehicle 1.

The automobile 1 includes an outside-vehicle information acquirer M1, an in-vehicle information acquirer M2, a communication unit 2, a security gateway device 4, a vehicle power supply 5, a computing device 6, and an actuator 7.

The outside-vehicle information acquirer M1 is constituted by, for example, a sensor for outputting information on an environment outside the automobile 1 (outside environment) to the computing system SY, and includes, for example, (1) a plurality of cameras provided on, for example, a body of the automobile 1 and configured to capture an image of an outside environment, (2) a plurality of radars provided on, for example, the body of the automobile 1 and configured to detect, for example, an outside-vehicle object, (3) a vehicle speed sensor configured to detect an absolute speed of the automobile 1, (4) an accelerator opening angle sensor configured to detect a pressing amount of an accelerator pedal of the automobile 1, (5) a steering angle sensor configured to detect a rotation angle (steering angle) of a steering wheel of the automobile 1, (6) a brake sensor configured to detect a pressing amount of a brake pedal of the automobile 1, and (7) a position sensor configured to detect a location of the automobile 1 (vehicle location information) by using a global positioning system (GPS).

The in-vehicle information acquirer M2 is constituted by, for example, a sensor that outputs information on an in-vehicle environment of the automobile 1 to the computing device 6, and includes, for example, (1) an in-vehicle camera disposed on an in-vehicle mirror, a dashboard, or other places of the automobile 1 and configured to capture a facial expression and a posture of a driver, an in-vehicle environment, and others, and (2) an in-vehicle sensor configured to acquire biometric information (e.g., body temperature, heart rate, or breathing) of the driver.

The computing device 6 is configured to receive an output from an outside-vehicle information acquirer M1, generates a path avoiding an obstacle on a road, and determining a target motion of the automobile 1 in traveling along the path. The computing device 6 is also configured to output a control signal for achieving the determined target motion to an actuator 7 that generates a driving force, a braking force, and a steering angle. This embodiment is characterized in that a computing device with a single-unit configuration achieves the determination of a target motion and the output of the control signal for obtaining the target motion. The computing device 6 with a single-unit configuration is, for example, a microprocessor constituted by one or more chips, and includes a CPU, a memory, and other components. The computing device 6 will be described in detail.

The actuator 7 is configured to operate in response to control from the computing device 6, and includes, for example, an engine 71, a brake 72, a steering 73, and a transmission 74. The actuator 7 also includes a so-called body-system actuator 75 such as an air bag and an automatic window (which is denoted as a "body system" in FIG. 1). The "actuator" as used herein either refers to one of various actuators for generating a driving force, a braking force, and a steering angle without distinguishing these actuators from one another, as in the case of the engine 71, the brake 72, the steering 73, and the transmission 74, or collectively refers to these actuators. Although not shown specifically, each actuator 7 may include an ECU, or may be configured to operate in response to control of an autonomous driving function unit 60 described later without including an ECU.

The engine 71 is a power driving source, and includes an internal combustion engine (e.g., a gasoline engine or a diesel engine). The computing system SY outputs an engine output change signal to the engine 71 in a case where the automobile 1 needs to be accelerated or decelerated. The engine 71 is controlled based on, for example, the manipulated variable of the accelerator pedal by a driver in manual driving, but is controlled based on a target motion signal indicating a target motion and output from the computing device 6 (hereinafter referred to simply as a target motion signal) in assist driving or autonomous driving. Although not shown, a rotating shaft of the engine 71 is coupled to an electric generator that generates electric power by an output of the engine 71. The engine 71 is an example of an actuator that generates a driving force.

The brake 72 is an electric brake that generates a braking force in this embodiment. The computing system SY outputs a brake request signal to the brake 72 in a case where the automobile 1 needs to be decelerated. The brake 72 that has received the brake request signal actuates a brake actuator (not shown) based on the brake request signal, and decelerates the automobile 1. The brake 72 is controlled based on, for example, the manipulated variable of the brake pedal by a driver in manual driving, and is controlled based on a target motion signal output from the computing system SY in assist driving or autonomous driving. The brake 72 is an example of an actuator that generates a braking force.

The steering 73 is an electric power steering (EPS) in this embodiment. In a case where the traveling direction of the automobile 1 needs to be changed, the computing device 6 outputs a steering direction change signal to the steering 73. The steering 73 is controlled based on, for example, the manipulated variable of the steering wheel (i.e., a handle) by a driver in manual driving, and is controlled based on a target motion signal output from the computing device 6 in assist driving or autonomous driving. The steering 73 is an example of an actuator that generates a steering angle.

The transmission 74 is a multistep transmission. The computing device 6 outputs a gear stage change signal to the transmission 74, in accordance with a driving force to be output. The transmission 74 is controlled based on, for example, the manipulated variable of the shift lever by a driver or a manipulated variable of the accelerator pedal by the driver in manual driving, and is controlled based on a target motion calculated by the computing device 6 in assist driving or autonomous driving.

The computing device 6 outputs a control signal based on an output of, for example, an accelerator opening angle sensor to, for example, the engine 71 in manual driving. On the other hand, in assist driving or autonomous driving, the computing device 6 sets a traveling path of the automobile 1, and outputs a control signal to, for example, the engine 71 such that the automobile 1 travels on the traveling path.

The communication unit 2 (corresponding to a wireless communication unit) includes an RF part 21 and a demodulator 22. The RF part 21 processes an RF received from the external network 90 through a vehicle-mounted antenna (not shown). The demodulator 22 demodulates the RF signal received by the RF part 21, and outputs the demodulated signal to the security gateway device 4. The external network 90 herein is used as a concept broadly including communication environments and configurations formed by networks, such as a mobile communication network and the Internet configured to enable communication with the own-vehicle 1, a device on which a communication unit is mounted, and so forth. The communication unit 2 is connected to a cloud service, a management sever, or other devices through the external network 90, for example. The terminal device 92 brought from outside the automobile 1 by a passenger thereof or an employee of a dealer may directly communicate with the communication unit 2 through Bluetooth (registered trademark), Wi-Fi (registered trademark), a mobile network, or the like. Communication in this case is also included in communication with the external network 90. In this disclosure, the concept including, for example, a driver and a passenger of the automobile 1, an employee of a dealer can be expressed simply as a user in some cases. The circuit configurations of the RF part 21 and the demodulator 22 of the communication unit 2 may employ general circuit configurations known to date, and thus, will not be described below.

The security gateway device 4 includes an authentication unit 41 that receives an output from the demodulators 22 of the communication unit 2, a decoding unit 42, and an encryption unit 44. Accesses from external communication devices are collected in this security gateway device 4, authenticated in the security gateway device 4, and then input to the computing device 6.

In a case where an external communication device makes access to the computing device 6 through the external network 90, the authentication unit 41 determines validity of the access from the external communication device based on a predetermined criterion, and determines whether to permit the access to the computing device 6. The "predetermined criterion" is not specifically limited as long as validity of access can be determined. For example, validity of an external communication device can be determined based on a public-key cryptography with a digital signature of certification authority. As the predetermined criterion, list information, such as a white list or a black list, previously held in the own-vehicle or received through a network 90 may be used. The authentication unit 41 outputs, to the decoding unit 42, a received signal from an external communication device authenticated by the authentication unit 41. Here, access from the external communication device is a concept including a so-called access request for reading and writing in-vehicle information issued from the external communication device to the computing device 6, and also including access with which the computing device 6 requests information, for example, to the external communication device (including an external management server) and returns information from the external communication device to the computing device 6.

The decoding unit 42 decodes data received from the authentication unit 41. In other words, the decoding unit 42 decodes received data from the external communication device authenticated by the authentication unit 41. For example, in a case where encrypted data based on the public-key cryptography as described above is received, a decoding process is performed on this data. In decoding, tamper detection using hash operation may be performed.

The authentication unit 41 and the decoding unit 42 perform processing in cooperation in some cases, and the order and the contents of the processing performed by these units can change depending on the type and attributes of the received data.

Data that has been authenticated by the authentication unit 41 and decoded by the decoding unit 42 is encrypted by the encryption unit 44 and output to the computing device 6. That is, the security gateway device 4 and the computing device 6 are connected to each other by encryption computation. The encryption unit 44 may be omitted such that data authenticated by the authentication unit 41 and decoded by the decoding unit 42 may be transmitted without any processing from the security gateway device 4 to the computing device 6. An encryption method used in the encryption unit 44 is not specifically limited, and various methods can be selectively used depending on a required security level. As a circuit configuration corresponding to the selected encryption method, a circuit configuration known to date can be used in accordance with the encryption method, and description thereof will not be specifically described here.

The computing device 6 includes the autonomous driving function unit 60, a comfort function unit 61, a communication controller 62, a storage unit 63, an update controller 64, a power controller 66, an input evaluator 67, a driving state detector 68. FIG. 1 shows the configuration for exhibiting the functions described in this embodiment, and does not show all the functions of the computing device 6. In this embodiment, the computing device 6 is divided into function blocks for convenience of description. Alternatively, in a case where a CPU is mounted on the computing device 6, the CPU may have functions of some of these function blocks of the computing device 6.

The communication controller 62 has the function of communicating with the security gateway device 4. The communication controller 62 includes, for example, a decoding unit (not shown) that decodes an output of the encryption unit 44 of the security gateway device 4 and outputs the decoded output to the autonomous driving function unit 60. The decoding unit only needs to be configured to enable decoding of a signal encrypted by the encryption unit 44, and can employ a configuration known to date. Thus, the configuration of the decoding unit will not be described here in detail.

The storage unit 63 stores software (including programs) for executing an OS, middleware, and an application described later. The storage unit 63 also stores data received from the external network 90 by way of the communication unit 2, and stores, for example, update information of software (hereinafter referred to as software update information). The storage unit 63 temporarily stores a backup file in a case where the backup file is created in updating each types of software, and the storage unit 63 also stores mirrored software, for example, in the case of performing processing with mirroring for a given period in order to verify validity of update information.

The update controller 64 updates software of the computing device 6 based on the software update information stored in the storage unit 63. A specific operation of the update controller 64 will be described in "Operation of Computing Device" described later.

The power controller 66 is connected to the vehicle power supply 5 mounted on an automobile (e.g., a vehicle-mounted battery), and controls power supply from the vehicle power supply 5 to constituents of the computing device 6. Units of constituents are not specifically limited, and each functional block may be defined as a constituent, or a part of the region of hardware (e.g., a circuit) or software (e.g., a program) may be defined as a unit of constituents. In addition, in a case where a vehicle power supply unit is a rechargeable battery, the power controller 66 has the function of determining whether the battery is being charged or not or detecting the remaining capacity of the battery. In addition, the power controller 66 calculates power consumption necessary for updating software and determines whether to update the software or not. Further, the power controller 66 has the function of controlling whether to energize each constituent or not or adjusting the amount of electric power to be supplied.

Here, in safe driving assistance technology and autonomous driving technology, since the computing device 6 has a large circuit scale, and even when the computing device 6 is in a sleep mode, a certain level of electric power is consumed, which might cause a decrease in the remaining capacity of the vehicle power supply (especially, a vehicle-mounted battery) and a short lifetime. In view of this, in this embodiment, the power controller 66 is configured to stop supply of electric power to the constituents of the computing device 6 except for minimum constituents required for start-up of the computing device 6 while the driving mechanism is not in operation, for example. In addition, in this embodiment, in a case where software update information is stored in the storage unit 63 while the driving mechanism is not in operation, the storage unit 63, the update controller 64, and an update target indicated by the software update information are set in an energized state so that the update controller 64 can update the software of the update target. The update target (target to be updated) refers to constituents that need to be started in order to update software of the update target.

The input evaluator 67 has the function of detecting contents of an operation by a user when the operation by the user is input to a switch button or an input interface such as a touch display to which the own-operation is to be input. Specifically, techniques known to date can be used.

The driving state detector 68 has the function of detecting a state of a driving mechanism of a vehicle. For example, in a case where the automobile 1 is an engine-driven automobile or a hybrid automobile, the driving state detector 68 is configured to detect an on/off state of ignition. In a case where the automobile 1 is an electric vehicle, the driving state detector 68 is configured to detect an on/off state of a driving motor. Specifically, techniques known to date can be used.

In assist driving or autonomous driving, the autonomous driving function unit 60 determines a target motion of the automobile 1 based on an output from the outside-vehicle information acquirer M1 or outputs from the outside-vehicle information acquirer M1 and the in-vehicle information acquirer M2, and outputs a control signal for causing the actuator 7 to operate in accordance with the target motion. An example of the configuration of the autonomous driving function unit 60 will be described in "Introduction Example to Real System" described later, and is not specifically described here.

The comfort function unit 61 is a generic term of a configuration functioning to enhance comfort of a driver and a passenger in a cabin. For example, the comfort function unit 61 includes air-conditioning equipment such as an air conditioner for keeping a comfortable state of, for example, temperature and humidity in the cabin and a control device (including control software) for the air-conditioning equipment, and audio equipment for replaying music and a control device (including control software) for the audio equipment. The comfort function unit 61 may also include lighting equipment and a control device for the lighting equipment.

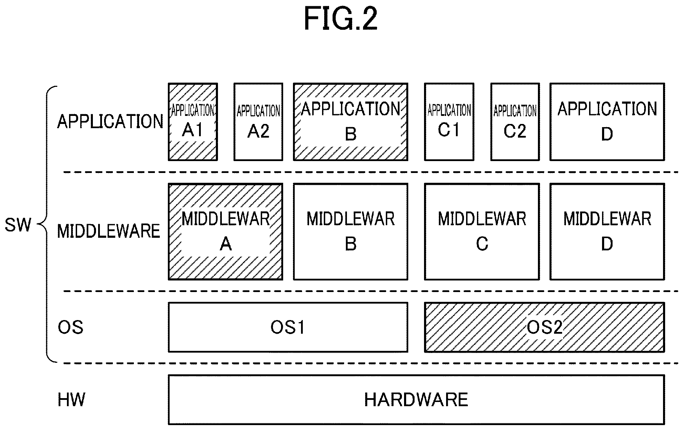

FIG. 2 illustrates example configurations of the autonomous driving function unit 60 and the comfort function unit 61 mainly with respect to a configuration of software. For example, the autonomous driving function unit 60 and the comfort function unit 61 are configured to operate on one or more platforms. Specifically, one or more operating systems (OSs) are installed in the computing device 6, and processing of functional blocks of the autonomous driving function unit 60 and the comfort function unit 61 run on the OSs.

In the example illustrated in FIG. 2, two OSs (hereinafter referred to as OS 1 and OS2 for convenience) are installed in the computing device 6 in order to cause the autonomous driving function unit 60 and the comfort function unit 61 to operate, middleware A and B and applications A1, A2, and B operate on the OS1, and middleware C and D and applications C1, C2, and D operate on the OS2. That is, an OS layer, a middleware layer, and an application layer are constructed on hardware. The number and configuration of OSs may be arbitrarily set, and are not specifically limited. Specifically, in FIG. 2, processing of the autonomous driving function unit 60 may be executed on the OS1 with processing of the comfort function unit 61 executed on the OS1. Alternatively, only part of the function of the comfort function unit 61, for example, only processing concerning music replay, is executed on an OS different from an OS used for other processing.

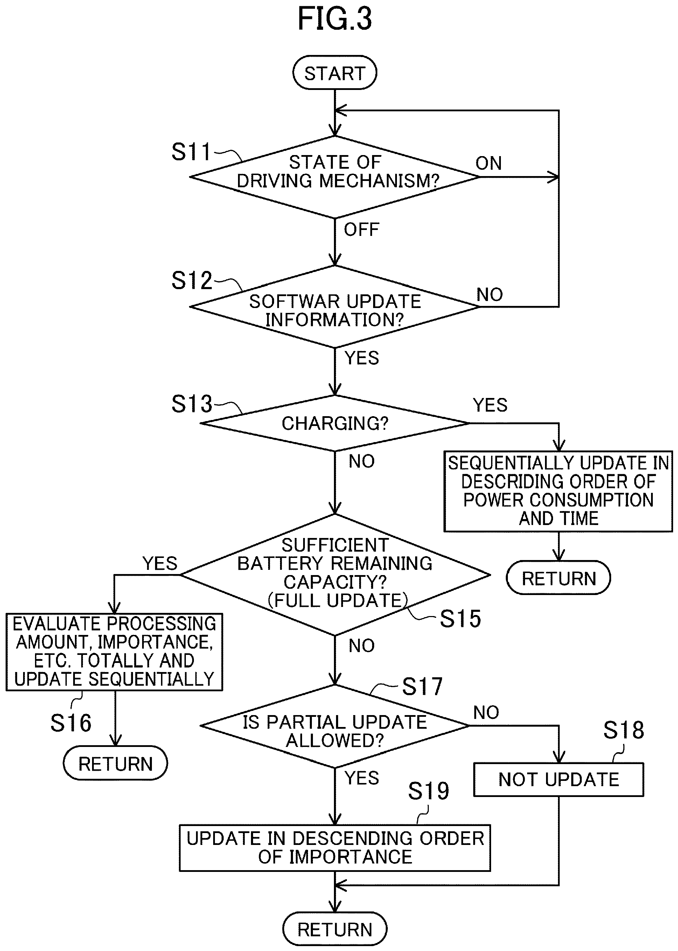

Next, an operation of the computing device 6 will be specifically described with reference to FIGS. 2 and 3. An example operation related to autonomous driving mainly by the autonomous driving function unit 60 of the computing device 6 will be described in "Introduction Example to Real System" described later, and an update process of software received from an external network will now be described. Here, it is assumed that update information of software in hatched portions in FIG. 2 is stored in the storage unit 63, the OS layer has a longest update time and has largest power consumption, and the update time and power consumption decrease in the order of the middleware layer and the application layer. Importance of update is highest in the application A1, and next highest in the application B.

In step S11, an operating state of the driving mechanism, that is, an on/off state, is checked. For example, in a case where the automobile 1 is driven by an engine, on/off of ignition is determined based on a detection result of the driving state detector 68. In a case where the automobile 1 is driven by a motor, on/off of the motor is determined. In step S12, it is determined whether update information of software received through the external network 90 is stored in the storage unit 63 or not. If the driving mechanism is not in operation (OFF in step S11) and the software update information is stored in the storage unit 63 (YES in step S12), the flow proceeds to step S13. The order of step S11 and step S12 is not limited to the order in FIG. 3, and the order of step S11 and step S12 may be reversed, or step S11 and step S12 may be performed in parallel.

As described above, if software update information is stored while the driving mechanism is not in operation, the power controller 66 energizes the storage unit 63, the update controller 64, and the update target of software that are constituents necessary for updating software in the computing device, and stops power supply to the other constituents.

Regarding the energization and stopping of power supply, the power controller 66 may check the storage unit 63 and specify an update target of software in the case of the driving mechanism is controlled to be off, for example, and if an update target is present, the energized state of the storage unit 63, the update controller 64, and the update target component of software may be maintained. If no update target of software is present, constituents except for minimum constituents necessary for starting the computing device 6 may be temporarily controlled to be off, and kept on standby in this state. Then, when software update information is sent from the external network 90, the communication unit 2 may send a start signal to the computing device 6, for example, and based on the start signal, the power controller 66 of the computing device 6 may be started so that the power controller 66 energizes the storage unit 63, the update controller 64, and the update target constituent of software are energized.

In step S13, it is determined whether the battery is being changed or not in the power controller 66. Step S13 is especially a process assuming a case where the automobile 1 is an electric automobile. Thus, in a case where the automobile 1 is a gasoline automobile, step S13 may be omitted.

In step S13, if the determination result is YES, there is a small limitation by electric power because of a charging state. If the process starts during charging, the automobile 1 is less likely to travel in a given period. Thus, the update controller 64 sequentially performs processes from an update process requiring large power consumption and a long time, based on, for example, the software update information in the storage unit 63. In the example illustrated in FIG. 2, the processes are sequentially started from software update of the OS2. At this time, for update targets of software, energization/non-energization may be switched such that only software to be updated in this process is started, and when the update is finished, energization to this update target is turned off, and a next update target is started and energized.

In a case where importance of the OS2 is not significantly high, it is determined whether to perform an update process of the OS2 in accordance with a location and a time period where charging is performed. For example, in a case where determination can be made based on a usage habit of a user and charging is performed in daytime, supposing a charging time is about one hour from a past history of the user, in a case where update of the OS2 takes one hour or more, update of OS2 is suspended and other update is performed with priority. The update process may be performed in such a manner that in a case where importance of the application A1 is high, the application A1 is updated and then, if the OS2 can be updated in terms of time, the OS2 is updated. Alternatively, the contents of update information may be presented to the user so that an update process is executed based on a priority order selected by the user. The same holds for steps S16 and S19 described later.

Thereafter, in step S14, software is updated in the order of the OS2, the middleware A, and the applications A1 and B, and when the update is finished, the software update process is finished. The flow may return to the determination in step S11 every when update of each block is finished. The process may be performed such that when an operation of the driving mechanism starts again, an interruption process is made to suspend update of software temporarily or overall, and the process is restarted or started from the beginning at next opportunity.

On the other hand, if the determination result in step S13 is NO, the flow proceeds to step S15, and it is determined whether there is a sufficient remaining capacity of the vehicle power supply 5. In step S15, it is determined whether a predetermined level or more of capacity remains or not depending on software to be updated. The predetermined value is not limited to one, and different predetermined values (e.g., stepwise values) may be defined. A plurality of different parameters, such as the "remaining capacity of the battery" and the "capacity of software update information (software to be updated)," may be used. Specifically, several levels of predetermined values may be provided such that if the capacity of software to be updated is several hundreds of megabytes [Mbyte], the battery remaining capacity is 80% or more, if the capacity of software to be updated is several tens of megabytes [Mbyte], the battery remaining capacity is 60% or more, and if the capacity of software to be updated is several megabytes [Mbyte], the battery remaining capacity is 40% or more.

In step S15, if there is a sufficient remaining capacity of the vehicle power supply 5 (YES in step S15), the update controller 64 totally evaluates the time necessary for updating software and the degree of importance, determines a priority order, and executes update processes of the software according to the priority order within the range of a usable power supply. The method for determining the priority order is not specifically limited, and for example, a score may be given to each event so that events are arranged in descending order of scores, or a specific function may be updated prior to the other functions, or the order may be specified from a management server. In step S15, in addition to, or instead of, the determination of the remaining capacity of the vehicle power supply 5, it may be determined whether a sufficient memory capacity remains or not. In such a case, in a manner similar to the case of the "remaining capacity of the vehicle power supply," determination in step S15 may be performed on the "remaining memory capacity" described above.

On the other hand, if the determination result in step S15 is NO, the flow proceeds to next S17, and it is determined whether part of software can be updated with a current remaining capacity of the vehicle power supply 5 or not.

Then, in step S17, if it is determined that update of even part of software is difficult, such as a case where the remaining capacity of the vehicle power supply 5 is below a predetermined value, (NO in step S17), the update controller 64 does not update any software, and the process is finished (step S18).

On the other hand, if the determination result in step S17 is YES, the update controller 64 sequentially executes update processes in decreasing order of importance within the range of the remaining capacity of the vehicle power supply 5, and when the update processes are finished, the flow is finished.

As described above, in this embodiment, in a case where software update information is stored in the storage unit 63 and the driving mechanism of the automobile 1 is not in operation, the power controller 66 energizes the storage unit 63, the update controller 64, and the update target indicated by the software update information, and the update controller 64 updates the update target software. In this manner, necessary software update can be performed with minimum power consumption while the driving mechanism is not in operation.

### OTHER EMBODIMENTS

The technique disclosed here is not limited to the embodiment described above, and can be substituted without departing from the scope of the claims.

In a case where control chips such as microcontrollers are mounted on actuators 7 (71 through 75), a memory as an update target may be mounted in the microcontrollers. In this case, software update information for the microcontrollers may be received by way of the communication unit 2 and then stored in the storage unit 63 so that the update controller 64 updates update targets in the microcontrollers by using the software update information stored in the storage unit 63.

Regarding update of software of an update target, in a case where the vehicle power supply 5 of the automobile 1 is being charged, the update controller 64 may sequentially perform update processes on software of the update target in descending order of power consumption and time required for updating the software, in accordance with a necessary charging time. For example, in a case where an approximate time required for charging is known, update processes may be sequentially performed in descending order of power consumption and required time, within the range of time required for charging.

Accordingly, the charging time can be effectively used. In addition, the time in which the user cannot use the computing device can be shortened.

### (Introduction Example to Real System)

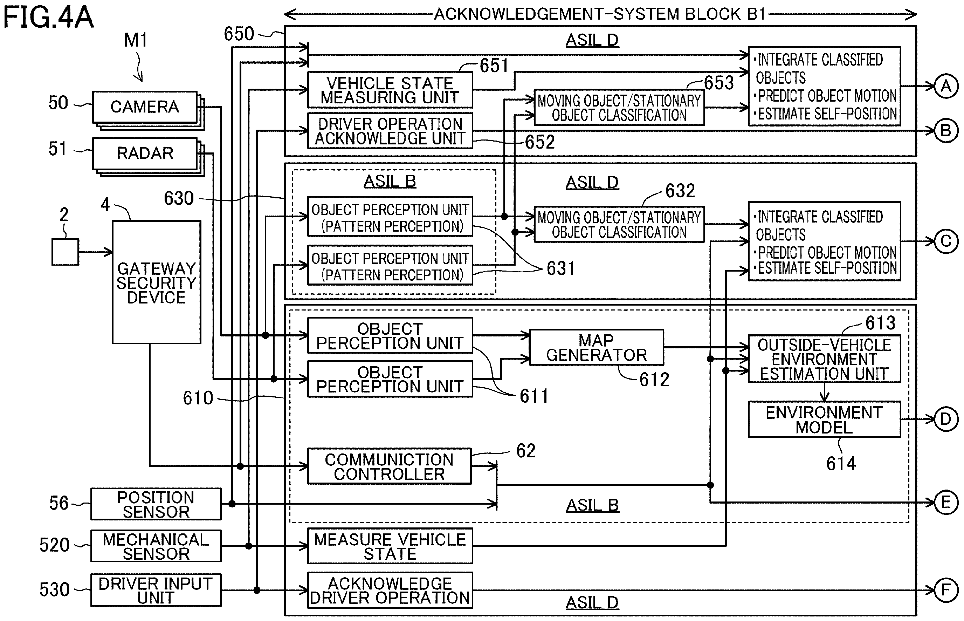

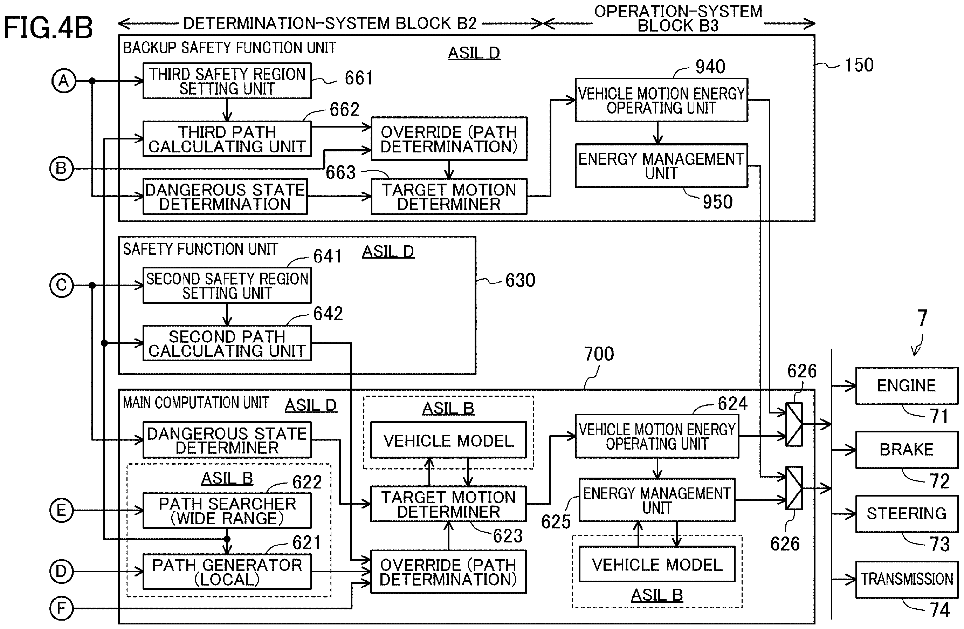

With reference to FIGS. 4A and 4B, an introduction example to a real system will be described. In the following description, FIGS. 4A and 4B will be collectively referred to simply as FIG. 4.

### -1. Summary-

First, an automobile computing device 6 (hereinafter referred to as the computing device 6) according to the present disclosure is divided into (1) a configuration for acknowledging an outside-vehicle environment and an in-vehicle environment (including a state of a driver) (hereinafter also referred to as an acknowledgement-system block B1), (2) a configuration for determining, for example, various states and situations based on an acknowledgement result in the acknowledgement-system block B1 and determining an operation of the automobile 1 (hereinafter also referred to as a determination-system block B2), and (3) a configuration for generating, for example, signals and data to be specifically transferred to actuators based on the determination in the determination-system block B2 (hereinafter also referred to as an operation-system block B3). The technique disclosed here has a feature in which the acknowledgement-system block B 1, the determination-system block B2, and the operation-system block B3 are integrated in one unit and implemented. In the computing device 6, the acknowledgement-system block B1, the determination-system block B2, and the operation-system block B3 achieve the functions as the autonomous driving function unit 60 described above.

The computing device 6 includes (1) the main computing unit 610 constituted by the acknowledgement-system block B1, the determination-system block B2, and the operation-system block B3 for implementing autonomous driving in normal driving, (2) the safety function unit 630 having the function of mainly complementing the acknowledgement-system block B1 and the determination-system block B2 of the main computing unit 610, and (3) the backup safety function unit 650 that moves the automobile 1 to a safe location when an abnormal event, such as a failure of the function of the main computing unit 610 or the safety function unit 630, occurs.

In this computing device 6, the acknowledgement-system block B 1 and the determination-system block B2 of the main computing unit 610 perform processing by using various models constructed by deep learning using a neural network. By performing the processing using such models, it is possible to perform driving control based on overall determination of, for example, a vehicle state, an outside-vehicle environment, and a driver state, that is, control by making a large amount of input information cooperate in real time. Recognition of an outside-vehicle environment using deep learning and calculation of paths are yet to be developed, and are supposed to remain at about ASIL-B. In FIG. 4, ASIL information in each block is shown as reference information, but the present disclosure is not limited to this description, and blocks may have function safety levels different from those shown in FIG. 4.

The safety function unit 630 is configured to (1) perceive an object outside a vehicle (hereinafter referred to as a target in this disclosure) based on a recognition method for, for example, a target conventionally employed for automobiles, and (2) set a safe region in which an automobile can pass with safety by a method conventionally employed for automobiles and set a path passing through the safe region as a traveling path through which automobiles have to pass. Such so-called rule-based determination and processing are performed so that a function safe level equivalent to ASIL-D can be thereby achieved.

The computing system SY is characterized in that the main computing unit 610 and the safety function unit 630 perform processing for the same purpose (e.g., path generation) in parallel, based on the same input information (including information acquired by the outside-vehicle information acquirer M1 and the in-vehicle information acquirer M2). Accordingly, deriving of a deviation process from the main computing unit 610 can be monitored, and determination or processing by the safety function unit 630 is employed, or computation is performed by the main computing unit 610 again, as necessary.

Functions of the main computing unit 610 and the safety function unit 630 (hereinafter these functions will also be referred to as a vehicle control function) are collectively constituted by one or more chips, or the main computing unit 610 and the safety function unit 630 may be constituted by different independent chips.

The computing device 6 includes the backup safety function unit 650 in order to handle even an event in which failures occur in both the main computing unit 610 and the safety function unit 630. The backup safety function unit 650 generates a path in a rule base based on outside-vehicle information, and has the function of executing vehicle control until an own-automobile is stopped at a safe location, as a function different from the main computing unit 610 and the safety function unit 630. Thus, the main computing unit 610 and the safety function unit 630 are preferably constituted by different devices (chips).

### -2. Configuration-

With reference to FIG. 4, a specific configuration of the computing system SY will now be described. Part of the configuration already described in the embodiment will be described by using common characters in some cases. Common part of the configurations may not be described in detail.

The computing device 6 receives, as input signals, data acquired by the outside-vehicle information acquirer M1 that acquires information on an outside-vehicle environment of an automobile and the in-vehicle information acquirer M2 that acquires information on an in-vehicle environment of an automobile. As an input signal to the computing system SY, information from a system or a service connected to an outside-vehicle network (e.g., the Internet) may be input through the security gateway device 4.

Examples of the outside-vehicle information acquirer M1 include (1) the plurality of cameras 50, (2) the plurality of radars 51, (3) a mechanical sensor 520 such as the vehicle speed sensor, (4) a driver input unit 530 such as an accelerator opening angle sensor, a steering angle sensor, and a brake sensor, and (5) a position sensor 56 including a positioning system such as a GPS.

Examples of the in-vehicle information acquirer M2 include an in-vehicle camera and an in-vehicle sensor. The in-vehicle sensor 59 includes, for example, a sensor for detecting a manipulation of a driver on various manipulation targets such as an accelerator pedal, a brake pedal, a steering, and various switches. A part of an output result of the in-vehicle information acquirer M2 is input to the input evaluator 67. FIG. 4 does not show the in-vehicle information acquirer M2.

### -2-1. Main Computing Unit-

Here, an example configuration of the main computing unit 610 and path generation using deep learning by the main computing unit 610 will be described.

As illustrated in FIG. 4, the main computing unit 610 includes an object perception unit 611 that perceives an object (target) outside a vehicle, based on inputs from the cameras 50 and/or the radars 51. The object perception unit 611 has the function of perceiving an object outside a vehicle, from an image (including video) taken by the cameras 50 outside a vehicle or a peak list of reflected waves using the radars 51. As described in the embodiment, the main computing unit 610 has the function of determining what is a perceived object by using deep learning. An obj ect perceiving technique based on an image or radio waves known to date is applicable to the object perception unit 611.

A result perceived by the object perception unit 611 is sent to a map generator 612. The map generator 612 performs a map generation process on each region obtained by dividing a vicinity of an own-vehicle into a plurality of regions (e.g., a forward region, a left-right region, and a rearward region). In the map generation process, for each region, object information perceived by the cameras 50 and object information perceived by the radars 51 are united and reflected in a map.

The map generated by the map generator 612 and part of data (e.g., map information) input from the security gateway device 4 and decoded by the communication controller 62 are used for estimating an outside-vehicle environment by an image perceiving process using deep learning in an outside-vehicle environment estimation unit 613. Specifically, in the outside-vehicle environment estimation unit 613, a 3D map representing an outside-vehicle environment is created by the image perceiving process based on an environment model 614 constructed by using deep learning. The deep learning uses a deep neural network (DNN). Examples of the deep neural network include a convolutional neural network (CNN). More specifically, in the outside-vehicle environment estimation unit 613, (1) maps for the regions are combined and an integrated map representing surroundings of the own-vehicle 1 is created, (2) displacement of the distance to the own-vehicle 1, direction, and relative speed with respect to a moving object in the integrated map are predicted, and (3) the result is incorporated in an outside-vehicle environment model 614. In addition, in the outside-vehicle environment estimation unit 613, (4) a position of the own-vehicle 1 on the integrated map is estimated based on a combination of high-accuracy map information taken from inside or outside of a vehicle, and positional information, vehicle speed information, and six-axis information acquired by, for example, a GPS, (5) a cost for the path described above is calculated, and (6) the result is incorporated in the outside-vehicle environment model 614 together with motion information of the own-vehicle 1 acquired by sensors. Through these processes, in the outside-vehicle environment estimation unit 613, the outside-vehicle environment model 614 is updated at any time, and is used for path generation by a path generator 621. Processing results in the object perception unit 611, the map generator 612, and/or the outside-vehicle environment estimation unit 613, and the outside-vehicle environment model 614 are used for processing in the authentication unit 41 of the security gateway device 4 described above.

A signal of a positioning system such as a GPS and data for, for example, a car navigation transmitted from an outside-vehicle network are input through the security gateway device 4, decoded by the communication controller 62, and sent to a path searcher 622. The path searcher 622 searches for a wide-range path of a vehicle by using a signal of a positioning system such as a GPS and data for, for example, a navigation transmitted from an outside-vehicle network.

The path generator 621 generates a traveling path of a vehicle based on the outside-vehicle environment model 614 and an output from the path searcher 622.

### -2-2. Safety Function Unit-

A configuration of the safety function unit 630 and path generation in a rule base by the safety function unit 630 will now be described.

As illustrated in FIG. 4, the safety function unit 630 includes an object perception unit 631 that perceives an object (target) outside a vehicle, based on inputs from the cameras 50 and/or the radars 51, in a manner similar to the main computing unit 610. The safety function unit 630 perceives an object outside a vehicle with a technique similar to the main computing unit 610, and determines what is the perceived object by a technique in a rule base known to date without using deep learning. For example, it is determined what is the perceived object through an identification machine achieving a function safe level equivalent to ASIL-D.

A result perceived by the object perception unit 631 is classified into a moving object and a stationary object. In FIG. 4, the flow is executed in circuit blocks denoted by 632 and represented as "moving object/stationary object classification." Specifically, in this process, (1) surroundings of the own-vehicle are divided into a plurality of regions (e.g., a forward region, a left-right region, and a rearward region), (2) object information perceived by the cameras 50 and object information perceived by the radars 51 are integrated in each region, and (3) classification information on a moving object and a stationary object for each region. Then, (4) classification results for the regions are integrated, and (5) as classification information on a moving object and a stationary object near the own-vehicle, the results are managed on a grid map, for example. With respect to a moving object, (6) a distance to the own-vehicle, a direction, and a relative speed are predicted, and results thereof are incorporated as additional information of the moving object, and (7) a location of the own-vehicle to the moving object/stationary object is estimated based on high-accuracy map information taken from outside or inside a vehicle and a combination of positional information, vehicle speed information, and six-axis information acquired by, for example, GPS. The safety function unit 630 detects a vehicle state based on vehicle speed information and six-axis information, and uses the vehicle state for path generation as additional information of the own-vehicle 1. In the safety function unit 630, a path is generated based on the estimated location of the own-vehicle with respect to the moving object/stationary object and a search result of a safe region.

The paths generated by the main computing unit 610 and the safety function unit 630 are sent to a target motion determiner 710, and an optimum target motion is determined in accordance with a comparison result of the paths. For example, in a case where the path generated by the main computing unit 610 deviates from the safe region searched by the safety function unit 630, the path generated by the safety function unit 630 is employed.

The target motion determiner 623 determines a target motion of the automobile 1.

A vehicle motion energy operating unit 624 and an energy management unit 625 calculate the amount of control of the actuator 7 such that a highest energy efficiency can be obtained in achieving the target motion determined by the target motion determiner 623. Specifically, for example, the energy management unit calculates an opening/closing timing of an intake/exhaust valve (not shown) and a fuel injection timing of an injector (not shown) and other parameters with which a highest fuel efficiency can be obtained in achieving an engine torque determined by the target motion determiner 623.

### -2-3. Backup Safety Function Unit-

A configuration of the backup safety function unit 650 and a path generation in a rule base by the backup safety function unit 650 will now be described. The backup safety function unit 650 has a configuration necessary for enabling movement operation to a minimum safe stop position in a rule base and a stop operation. The configuration can be generally implemented with a similar function to the safety function unit 630.

As illustrated in FIG. 4, in the backup safety function unit 650, a moving object and a stationary object are separated from each other based on a result perceived by the object perception unit 631. In FIG. 4, the flow is executed in circuit blocks denoted by 653 and represented as "moving object/stationary object classification." As illustrated in FIG. 5, the object perception unit 631 may be common to the safety function unit 630, or may be individually provided in the backup safety function unit 650. In addition, the backup safety function unit 650 includes a vehicle state measuring unit 651 that measures a vehicle state, and a driver operation acknowledge unit 652 that acknowledges an operation state of a driver. The vehicle state measuring unit 651 acquires a vehicle state based on vehicle speed information and six-axis information in order to use the vehicle state for path generation as additional information of the own-vehicle 1. The other functions are independently provided in the main computing unit 610 and the safety function unit 630, but substantial functions are similar to those in the configuration described above. Thus, details thereof will not be described.

As described above, division of the update target software, that is, the range included in one update target software, can be arbitrarily set. For example, in the configuration illustrated in FIG. 4, the entire acknowledgement-system block B1 may be an update target of software, or part of the configuration of the acknowledgement-system block B1 may be an update target of software. The range of update target software may be defined in accordance with the content of necessary update. For example, the same holds for the determination-system block B2 and the operation-system block B3. The acknowledgement-system block B1, the determination-system block B2, and the operation-system block B3 may be configured to operate on a common OS, or may be configured to operate on different OSs.

### INDUSTRIAL APPLICABILITY

The technique disclosed here is useful for an automobile computing system to be mounted on an automobile.

### DESCRIPTION OF REFERENCE CHARACTERS

- 1: automobile
- 2: communication unit (wireless communication unit)
- 63: storage unit
- 64: update controller
- 66: power controller

## Claims

1. An automobile computing device configured to be mounted on an automobile (1), the automobile computing device comprising:
a wireless communication unit (2) configured to receive software update information from an external network (90);
a storage unit (63) configured to store the software update information received from the wireless communication unit (2);
an update controller (64) configured to update software of the computing device, based on the software update information stored in the storage unit (63); and
a power controller (66) configured to control a power supply from a battery of the automobile to each constituent of the computing device, wherein
in a case where software update information is stored in the storage unit (63) and a driving mechanism of the automobile (1) is not in operation, the power controller (66) energizes the storage unit (63), the update controller (64), and an update target indicated by the software update information, and the update controller (64) updates software of the update target, **characterized in that**
the power controller (66) is configured to stop supply of electric power to all constituents of the computing device (6) except for minimum constituents required for startup of the computing device (6) while the driving mechanism is not in operation, and furthermore, in a case where software update information is stored in the storage unit (63), to set the update controller (64) and an update target indicated by the software update information in an energized state so the update controller (64) can update the software of the update target while the driving mechanism is not in operation, wherein
the computing device is configured to acquire status information of the battery of the automobile (1) and the update controller (64) is configured to determine a priority order and to execute update processes of the software sequentially in accordance with the determined priority order, i.e. in descending order of importance, within the range of usable power from the battery and to not perform a software process when there is no sufficient usable power from the battery.

2. The automobile computing device according to claim 1, wherein in a case where the software update information is received while the driving mechanism is in operation, the storage unit (63) temporarily stores the software update information, and after operation of the driving mechanism is stopped, the update controller (64) updates the software of the update target.

3. The automobile computing device according to claim 1, wherein the update controller (64) updates the software of the update target in a time period in which a user does not use the automobile computing device, based on input information from the user or a usage habit of the user.

4. The automobile computing device according to claim 1, wherein
the computing device is configured to acquire status information of a battery of the automobile (1), and
in a case where the battery of the automobile (1) is being charged, the update controller (64) sequentially updates software of the update target in descending order of power consumption.

5. The automobile computing device according to claim 1, wherein
the computing device is configured to acquire status information of a battery of the automobile (1), and
in a case where the battery of the automobile (1) is being charged, the update controller (64) sequentially updates the software of the update target in descending order of power consumption and time required for updating the software, in accordance with a necessary charging time .

## Patentansprüche

1. Kraftfahrzeug-Rechenvorrichtung, welche derart konfiguriert ist, dass sie an einem Kraftfahrzeug (1) montiert werden kann, wobei die Kraftfahrzeug-Rechenvorrichtung aufweist:
eine Drahtlos-Kommunikationseinheit (2), die derart konfiguriert ist, dass sie Softwareaktualisierungsinformationen von einem externen Netzwerk (90) empfängt;
eine Speichereinheit (63), die derart konfiguriert ist, dass sie die Softwareaktualisierungsinformationen speichert, die von der Drahtlos-Kommunikationseinheit (2) empfangen werden;
eine Aktualisierungssteuerung (64), die derart konfiguriert ist, dass sie die Software der Rechenvorrichtung anhand der Softwareaktualisierungsinformationen aktualisiert, die in der Speichereinheit (63) gespeichert sind; und
eine Leistungssteuerung (66), die derart konfiguriert ist, dass sie eine Leistungsversorgung von einer Batterie des Kraftfahrzeugs zu jeder Komponente der Rechenvorrichtung steuert, wobei
in einem Fall, in dem Softwareaktualisierungsinformationen in der Speichereinheit (63) gespeichert sind und ein Antriebsmechanismus des Kraftfahrzeugs (1) nicht in Betrieb ist, die Leistungssteuerung (66) die Speichereinheit (63), die Aktualisierungssteuerung (64) und ein Aktualisierungsziel, das durch die Softwareaktualisierungsinformationen angegeben wird, mit Energie versorgt, und die Aktualisierungssteuerung (64) die Software des Aktualisierungsziels aktualisiert,
**dadurch gekennzeichnet, dass**
die Leistungssteuerung (66) derart konfiguriert ist, dass sie die Versorgung mit elektrischer Leistung an alle Komponenten der Rechenvorrichtung (6) mit Ausnahme von minimalen Komponenten, die für das Starten der Rechenvorrichtung (6) erforderlich sind, stoppt, während der Antriebsmechanismus nicht in Betrieb ist, und darüber hinaus in einem Fall, in dem Softwareaktualisierungsinformationen in der Speichereinheit (63) gespeichert sind, die Aktualisierungssteuerung (64) und ein Aktualisierungsziel, das durch die Softwareaktualisierungsinformationen angegeben wird, in einen mit Energie versorgten Zustand versetzt, so dass die Aktualisierungssteuerung (64) die Software des Aktualisierungsziels aktualisieren kann, während der Antriebsmechanismus nicht in Betrieb ist, wobei
die Rechenvorrichtung derart konfiguriert ist, dass sie Statusinformationen der Batterie des Kraftfahrzeugs (1) erfasst, und die Aktualisierungssteuerung (64) derart konfiguriert ist, dass sie eine Prioritätsreihenfolge bestimmt und Aktualisierungsprozesse der Software aufeinanderfolgend gemäß der bestimmten Prioritätsreihenfolge, d. h. in absteigender Reihenfolge der Wichtigkeit, innerhalb des Bereichs der nutzbaren Leistung von der Batterie ausführt und einen Softwareprozess nicht ausführt, wenn keine ausreichende nutzbare Leistung von der Batterie vorhanden ist.

2. Kraftfahrzeug-Rechenvorrichtung nach Anspruch 1, wobei in einem Fall, in dem die Softwareaktualisierungsinformationen empfangen werden, während der Antriebsmechanismus in Betrieb ist, die Speichereinheit (63) die Softwareaktualisierungsinformationen vorübergehend speichert, und nachdem der Betrieb des Antriebsmechanismus gestoppt ist, die Aktualisierungssteuerung (64) die Software des Aktualisierungsziels aktualisiert.

3. Kraftfahrzeug-Rechenvorrichtung nach Anspruch 1, wobei die Aktualisierungssteuerung (64) die Software des Aktualisierungsziels in einem Zeitraum aktualisiert, in dem ein Benutzer die Kraftfahrzeug-Rechenvorrichtung nicht benutzt, anhand der Eingabeinformationen von dem Benutzer oder einer Nutzungsgewohnheit des Benutzers.

4. Kraftfahrzeug-Rechenvorrichtung nach Anspruch 1, wobei
die Rechenvorrichtung derart konfiguriert ist, dass sie Statusinformationen einer Batterie des Kraftfahrzeugs (1) erfasst, und
in einem Fall, in dem die Batterie des Kraftfahrzeugs (1) aufgeladen wird, die Aktualisierungssteuerung (64) die Software des Aktualisierungsziels in absteigender Reihenfolge des Leistungsverbrauchs aufeinanderfolgend aktualisiert.

5. Kraftfahrzeug-Rechenvorrichtung nach Anspruch 1, wobei
die Rechenvorrichtung derart konfiguriert ist, dass sie Statusinformationen einer Batterie des Kraftfahrzeugs (1) erfasst, und
in einem Fall, in dem die Batterie des Kraftfahrzeugs (1) aufgeladen wird, die Aktualisierungssteuerung (64) die Software des Aktualisierungsziels in absteigender Reihenfolge des Leistungsverbrauchs und der Zeit, die für das Aktualisieren der Software erforderlich ist, entsprechend einer erforderlichen Ladezeit, aufeinanderfolgend aktualisiert.

## Revendications

1. Dispositif informatique d'automobile configuré pour être monté sur une automobile (1), le dispositif informatique d'automobile comprenant :
une unité de communication sans fil (2) configurée pour recevoir des informations de mise à jour de logiciel depuis un réseau externe (90) ;
une unité de stockage (63) configurée pour stocker les informations de mise à jour de logiciel reçues de l'unité de communication sans fil (2) ;
un dispositif de commande de mise à jour (64) configuré pour mettre à jour le logiciel du dispositif informatique sur la base des informations de mise à jour de logiciel stockées dans l'unité de stockage (63) ; et
un dispositif de commande d'énergie (66) configuré pour commander une alimentation en énergie depuis une batterie de l'automobile à chaque composant du dispositif informatique, dans lequel
si des informations de mise à jour de logiciel sont stockées dans l'unité de stockage (63) et qu'un mécanisme d'entraînement de l'automobile (1) ne fonctionne pas, le dispositif de commande d'énergie (66) alimente l'unité de stockage (63), le dispositif de commande de mise à jour (64), et une cible de mise à jour indiquée par les informations de mise à jour de logiciel, et le dispositif de commande de mise à jour (64) met à jour le logiciel de la cible de mise à jour,
**caractérisé en ce que**
le dispositif de commande d'énergie (66) est configuré pour arrêter la fourniture d'énergie électrique à tous les composants du dispositif informatique (6) à l'exception d'un nombre minimum de composants requis pour le démarrage du dispositif informatique (6), tandis que le mécanisme d'entraînement ne fonctionne pas, et par ailleurs si des informations de mise à jour de logiciel sont stockées dans l'unité de stockage (63) pour placer le dispositif de commande de mise à jour (64) et une cible de mise à jour indiquée par les informations de mise à jour de logiciel dans un état alimenté de sorte que le dispositif de commande de mise à jour (64) peut mettre à jour le logiciel de la cible de mise à jour alors que le mécanisme d'entraînement ne fonctionne pas, dans lequel
le dispositif informatique est configuré pour acquérir des informations de statut de la batterie de l'automobile (1) et le dispositif de commande de mise à jour (64) est configuré pour déterminer un ordre de priorité et pour exécuter des processus de mise à jour du logiciel de manière séquentielle conformément à l'ordre de priorité déterminé, etc., dans un ordre décroissant d'importance, dans la limite de l'énergie utilisable provenant de la batterie et pour ne pas réaliser un processus de logiciel lorsqu'il n'y a pas suffisamment d'énergie utilisable provenant de la batterie.

2. Dispositif informatique d'automobile selon la revendication 1, dans lequel si les informations de mise à jour de logiciel sont reçues alors que le mécanisme d'entraînement ne fonctionne pas, l'unité de stockage (63) stocke temporairement les informations de mise à jour de logiciel, et une fois que le fonctionnement du mécanisme d'entraînement est arrêté, le dispositif de commande de mise à jour (64) met à jour le logiciel de la cible de mise à jour.

3. Dispositif informatique d'automobile selon la revendication 1, dans lequel le dispositif de commande de mise à jour (64) met à jour le logiciel de la cible de mise à jour dans une période de temps dans laquelle un utilisateur n'utilise pas le dispositif informatique d'automobile, sur la base des informations d'entrée de l'utilisateur ou d'une habitude d'utilisation de l'utilisateur.

4. Dispositif informatique d'automobile selon la revendication 1, dans lequel
le dispositif informatique est configuré pour acquérir des informations de statut d'une batterie de l'automobile (1), et
si la batterie de l'automobile (1) est en cours de chargement, le dispositif de commande de mise à jour (64) met à jour de manière séquentielle le logiciel de la cible de mise à jour dans l'ordre décroissant de la consommation d'énergie.

5. Dispositif informatique d'automobile selon la revendication 1, dans lequel
le dispositif informatique est configuré pour acquérir des informations de statut d'une batterie de l'automobile (1), et
si la batterie de l'automobile (1) est en cours de chargement, le dispositif de commande de mise à jour (64) met à jour de manière séquentielle le logiciel de la cible de mise à jour dans l'ordre décroissant de la consommation d'énergie et du temps requis pour la mise à jour du logiciel, conformément à un temps de charge nécessaire.
